Europäisches Patentamt

European Patent Office

Office européen des brevets

(19)

(11) **EP 1 304 816 B1**

(12) **EUROPEAN PATENT SPECIFICATION**

(45) Date of publication and mention
of the grant of the patent:
**22.09.2004 Bulletin 2004/39**

(51) Int Cl.⁷: **H04B 7/005**

(21) Application number: **02102457.5**

(22) Date of filing: **17.10.2002**

(54) **A method and apparatus for controlling power in a communications system**

Verfahren und Vorrichtung zur Leistungssteuerung in einem Kommunikationssystem

Procédé et appareil pour commander la puissance dans un système de télécommunications

(84) Designated Contracting States:
**AT BE BG CH CY CZ DE DK EE ES FI FR GB GR
IE IT LI LU MC NL PT SE SK TR**

(30) Priority: **19.10.2001 FI 20012033**

(43) Date of publication of application:
**23.04.2003 Bulletin 2003/17**

(73) Proprietor: **Nokia Corporation**
**02150 Espoo (FI)**

(72) Inventors:
• **Nuutinen, Jukka**
**90630, Oulu (FI)**
• **Horneman, Kari**
**90800, Oulu (FI)**
• **Pajukoski, Kari**
**90240, Oulu (FI)**

(74) Representative: **Äkräs, Tapio Juhani**
**Oy Kolster Ab,**
**Iso Roobertinkatu 23,**
**P.O. Box 148**
**00121 Helsinki (FI)**

(56) References cited:
**EP-A- 1 102 416**

## Description

### FIELD OF THE INVENTION

The invention relates to communications systems, and more particularly to mechanisms for adjusting the power control step size.

### BACKGROUND OF THE INVENTION

The WCDMA (Wide Band Code Division Multiple Access) is a modulation and multiple access technique based on a well-known spread spectrum theory, where the data transmitted by a transmitter is spread into a frequency range and identified using a code. The power of the WCDMA system must be controlled in order to maximize the throughput thereof. Firstly, all powers transmitted by mobile stations should be substantially equal at the base station irrespective of multipath propagation. Secondly, only the minimum power required for reliable data transmission is allowed from the base station transmitter so that as many users as possible can share the same cell (the system is interference limited).

The basic power control in WCDMA system is based on (SIR) estimation. When a received SIR (Signal-to-Interferance-Ratio) at a receiver is too low, a command to increase the transmission power by a fixed step is transmitted to the transmitter. When the received SIR is too high, a command to decrease the transmission power by a fixed step is transmitted.

In a more sophisticated WCDMA system, power control can be divided into three parts. In downlink power control, from a base station to a mobile station, the base station constantly reduces its output power until the mobile station requires more power. The total power of the base station can thus be kept low and the capacity of one cell can be maximized without disturbing other cells.

Uplink power control, from a mobile station to a base station, is composed of open-loop power control and closed-loop power control. In open-loop power control, the mobile station estimates signal attenuation on a radio channel and on the basis thereof roughly adjusts its output power. Open-loop power control is needed to compensate the long term fading.

Since the radio channels in the downlink and uplink directions are at different frequencies, the open-loop estimate for signal attenuation is not necessarily accurate in the uplink direction. In closed-loop power control, the base station measures the relative power level of each mobile station signal and compares it with a threshold value. A power control command is sent to the mobile station, for example at 1.25 ms intervals, according to which the mobile station increases or reduces the transmission power by a predetermined fixed step, for example 1.0 dB.

Maintaining the power control step size constant causes problems in situations where the signal or the interference level changes occasionally but not constantly. If power control in a radio system is carried out using a large fixed step size, a strong fluctuation of the power used around the desired power level becomes a problem. If the step size of power control is small, there is a risk that the power control algorithm cannot follow the rapid variations in the SIR (Signal-to-Interference Ratio). A priort art power control method is disclosed by EP 1102416 A.

The inventors have observed that if the communication environment is not purely Gaussian, i.e. also non-Gaussian noise is present, the power cannot be controlled optimally with the prior art power control methods. Additionally the performance of the WCDMA radio link is highly degraded when e.g. impulsive non-Gaussian noise is present.

### BRIEF DISCLOSURE OF THE INVENTION

It is thus an object of the present invention to provide a new mechanism for adjusting power control in the presence of non-Gaussian or impulsive interference.

This object and other advantages provided by the invention are achieved by a method and an element as claimed in claims 1 and 5, respectively. The preferred embodiments of the invention are disclosed in the dependent claims.

The invention is based on the idea of formulating the statistics of the power distribution of the received signal before despreading the received signal and adjusting the power control step size according to those statistics, preferably according to the kurtosis of a received signal. In other words, the power control (PC) step size is controlled such that it adapts to the interference profile.

An advantage of the method and arrangement of the invention is that they improve the ratio of the number of bit errors to the total number of bits transmitted in a given time interval, i.e. the so-called BER (Bit-Error-Rate) figure.

### BRIEF DESCRIPTION OF THE DRAWINGS

In the following the invention will be described in greater detail by means of preferred embodiments with reference to the accompanying drawings, in which

Figure 1 is an example of the algorithm of the invention;
Figure 2 illustrates a Gaussian distribution of samples of a received signal; and
Figure 3 illustrates a Gaussian distribution and impulsive distribution.

DETAILED DESCRIPTION OF THE INVENTION

In environment where non-Gaussian or impulsive interference is present, such as in indoor channels, a typical power control (PC) step size of 1 dB may not be acceptable in all cases. The fixed step size may sometimes be too big or too small. These facts have led to an idea of the invention in which the power control step size is varied adaptively taking into account environmental situations. Environmental situations may be defined, as situations where random and unpredictable electrical signals produced by natural processes, both internal and external of an electrical system, exist. In other words, in addition to Gaussian noise, impulsive noise is present.

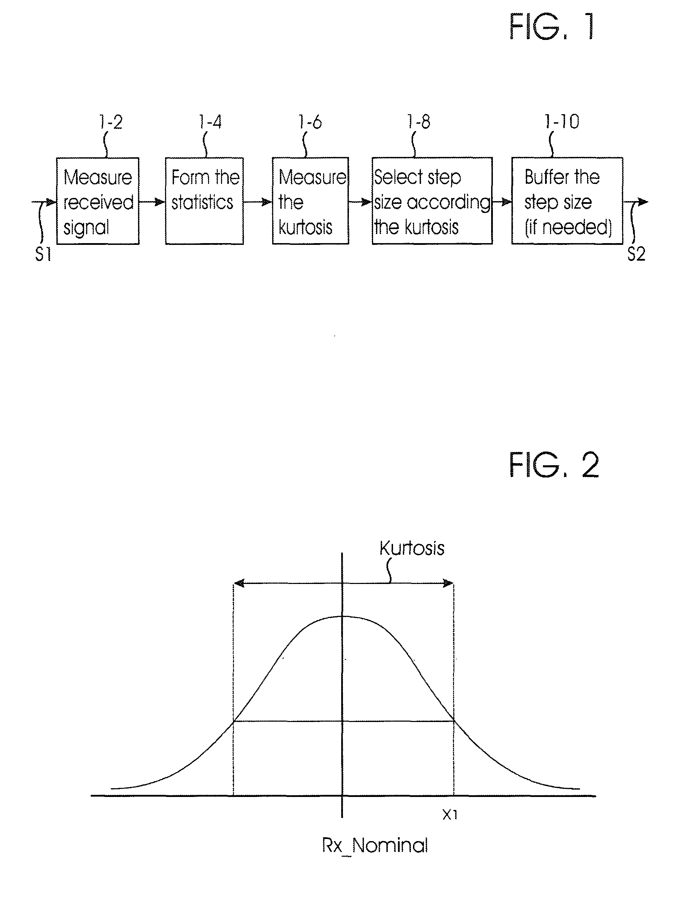

In the method of the invention, control of the power control step size is based on the idea of formulating the statistics of the received signal and adjusting the power control step size according to those statistics and especially the kurtosis of a received wideband signal. The adjustment can be carried out before despreading the received signal. An implementation of the proposed algorithm is shown in Figure 1.

In Figure 1 in step 1-2 a receiver measures the power of an incoming signal S1. Measurements can be made e.g. frame-by-frame or slot-by-slot. Since the power of the received signal typically varies according to some statistics around the nominal power value, statistics are formed from the received signal in step 1-4. Figure 2 shows graphically how the measured power values are statistically distributed among certain power values with Gaussian distribution. The x-axis represents received power values (variable) around the nominal received power value Rx-Nominal. The y-axis represents the number of samples falling to each sample value (the probability P(x>x0), the probability of x-value). The highest number of samples have the nominal, and the more a power value deviates from the nominal value, the more rarely such a value occurs in the measured samples.

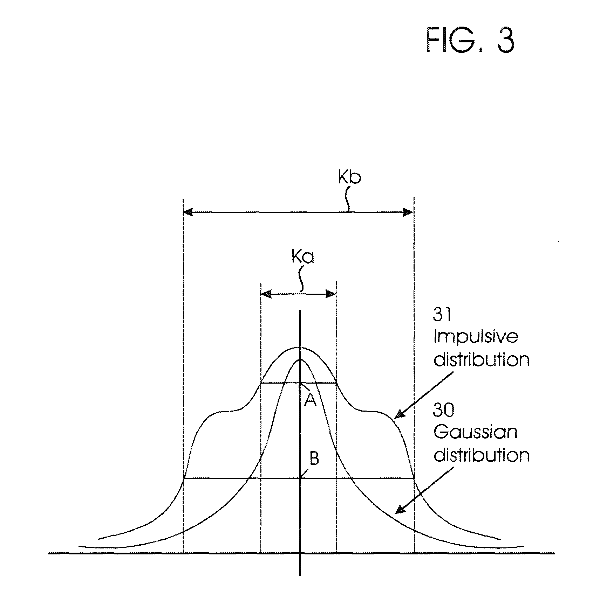

After detecting the power distribution of the incoming signal the kurtosis is measured from the distribution in step 1-6. The kurtosis can be defined as the width of the distribution as shown in Figure 2. Since the distribution is symmetrical, also the width of one half of distribution (e.g. variance) is called a kurtosis herein. The measurement of the kurtosis is shown in Figure 3.

Figure 3 shows two distributions of an incoming signal: a Gaussian distribution 30 and an impulsive distribution 31. The impulsive distribution 31 may comprise the Gaussian distribution and a component from the impulsive distribution. As defined above, the kurtosis is the width of the distribution in the direction of the x-axis. In Figure 3, the kurtosis of the two distributions is taken from two different points A and B on the y-axis resulting in kurtosis Ka and kurtosis Kb for both distributions 30 and 31. Typically the kurtoses measured near the top of each of these distributions (e.g. at point A) are close to each other. This is due to the fact that close to the peak of the distributions the kurtosis are small or narrow. Lower down, the difference between the distributions increase as can also be seen from the Figure 3. In other words, some power values occur more often in the measured samples than they should in an Gaussian case. As a consequence, the shape of the statistical power distribution is deformed from the Gaussian distribution.

The measurements can be proceeded as follows. Firstly, the two kurtoses, A and B, are taken as variances from the statistical power distribution. The variance can be defined as the deviation from a power value point to the y-axis, i.e. to the nominal value. Secondly, the ratio of the variances of these two kurtoses is computed. This ratio from the incoming power distribution is then compared to the ratio of the Gaussian power distribution. If the comparison shows an acceptable agreement with the Gaussian distribution, the power profile of the received signal Rx is considered to be Gaussian. In this case, power control may proceed as in a conventional case, i.e. by using e.g. a 1 dB fixed step size. On the other hand, if the power profile shows minor agreement with the Gaussian distribution, the Rx profile may be considered impulsive. In this case, the adaptive scheme may be switched on. The adaptive scheme may also be used with Gaussian distribution.

Only two kurtoses are shown in Figure 3. It is obvious that also more kurtosis measurements can be made to find out the nature of the incoming signal.

In step 1-8, the power control step size can be selected and adjusted according to the kurtosis of the distribution. One possibility to choose the adaptive step size is to divide the nominal 1 dB step size by the variance ratio of the two samples A and B. This is shown in the following equation:

$$Step\_Size = \frac{1}{\left( \dfrac{\sigma_b^2}{\sigma_a^2} \right)} = \frac{\sigma_a^2}{\sigma_b^2}$$

, wherein

step_size is the calculated power control step size;

$\sigma_a$ is the variance of the A sample; and

$\sigma_b$ is the variance of the B sample.

An alternative is to use a priori knowledge of the step size and variance. In this case the adaptation may be trained to choose the optimal step size according to the previous decisions. For this different power control, step sizes may be stored for different distributions in advance. Also in this case it must be noted that the method is not limited to a specific step size.

In step 1-8 also the decision of using a conventional method for step size calculation or using statistics for step size calculation can be made. Finally the step size may be buffered in step 1-10 for reusing purposes.

The invention can be simulated e.g. with the following arrangement: one WCDMA user with the mobile speed of 3 km/h, a pedestrian walkway channel profile and a WCDMA spreading factor for data channel of 64. The spreading factor describes the ratio between the chip rate (= number of chips, bits of the code signal transmitted in one second) and the symbol rate (= number of signal elements of the line signal transmitted per time unit).

The impulsive noise may be generated in such a way that peaks with random standard deviation can be randomly added to the transmitted Tx signal. A Gaussian noise source may also be added to the signal. To make the simulation even more realistic power control bits may be corrupted by errors.

The adaptive step size is calculated by dividing the nominal 1 dB step size by the variance ratio of the two samples A and B. The kurtosis A is measured from the points of 30 % of the existing samples and the kurtosis B is measured from the points of 40 % of the existing samples.

From the simulation run by the above-mentioned arrangement it can be realized that impulsive noise degrades the performance considerably no matter how big the PC step is. The best performance is obtained when interference is known a priori exactly. In case interference is not known, it can be estimated and even in this case the performance of the proposed method is better than using fixed step size. This easily shows the potential and advantages of the adaptive scheme.

One purpose of power control is to adjust the transmission power to the lowest possible level still providing an acceptable communication link. This is achieved by the invention and its embodiments where the receiving end may advise the transmitting end to reduce or to increase the transmission power as described above.

The invention is intended to adapt the size of power control steps in an intelligent way based on e.g. the measured distribution of noise amplitude or the earlier power control commands. This is very usable in the presence of impulsive noise, e.g. in cases where the central limit theorem is not valid, such as in the cases where the noise comes dominantly from a low number of high data rates users or nearby external impulsive noise source, such as the existing (other than WCDMA) cellular system GSM (Global System for Mobile Communications).

An adaptive step size leads thus to a performance enhancement, since the invention reduces the performance degradation of the WCDMA. This is due to the fact that the PC step size may be adjusted according the interference signal, i.e. the received signal.

Utilizing a particular implementation of the invention in a WCDMA system and assuming a certain model for the impulsive noise can obtain performance gain. The proposed algorithm adapts to the changing communication environment thus giving gain in performance in certain conditions, such as in indoor situations.

The invention and its embodiments also improve the BER as a function of Es/No, energy per bit-to-noise density ratio. Further, the algorithm is easy to implement by software. The advantages of the invention and its embodiments exceed a disadvantage of the invention: the computation of statistics.

It will be obvious to a person skilled in the art that, as the technology advances, the inventive concept can be implemented in various ways. The invention and its embodiments are not limited to the examples described above but may vary within the scope of the claims.

## Claims

1. A method for controlling transmission power in a communications system, comprising

   receiving a signal (S1) in a receiver instructing a transmitter to increase or decrease the transmission power by a power control step

   determining statistics of a power distribution of a received signal; and

   controlling the size of said power control step adaptively on the basis of said statistics, **characterized by** comprising the steps of

   comparing said determined statistics with corresponding statistics of a Gaussian power distribution; and controlling the size of said power control step adaptively on the basis of said statistics by

   using a predetermined fixed power control step size if the determined statistics substantially match the statistics of the Gaussian power distribution;

   using a power control step size selected or calculated on the basis of said determined statistics if said determined statistics deviate from said Gaussian statistics.

2. A method according to claim 1, **characterized by** the steps of:

   measuring (1-2) the received signal (S1);
   determining (1-4) the statistics of the power distribution of the received signal (S1) comprising the transmitted signal and noise on the basis of said measurement;
   determining (1-6) at least one kurtosis value of the formed power distribution; and
   calculating (1-8) a power control step size at least partly based on a priori knowledge of the step size.

3. A method according to claim 2, **characterized by** further comprising the step of:

calculating or selecting (1-8) a power control step size at least partly based on the determined kurtosis value.

4. A method according to claim 2 or 3 **characterized in that** the received signal profile is compared with at least one buffered (1-10) signal profile having a defined power control step size and if the received signal profile matches at least partly the buffered signal profile, the power control step size is linked to be the defined power control step size.

5. An apparatus for controlling transmission power in a communications system, which apparatus is adapted to receive a signal (S1) instructing a transmitter to increase or decrease the transmission power by a power control step, wherein the apparatus is adapted to

determine statistics of a power distribution of a received signal; and

control the size of said power control step adaptively on the basis of said statistics, **characterized in that** the apparatus is further adapted to

compare said determined statistics with corresponding statistics of a Gaussian power distribution; and

use a predetermined fixed power control step size if the determined statistics substantially match the statistics of the Gaussian power distribution;

use a power control step size selected or calculated on basis of said determined statistics if said determined statistics deviate from said Gaussian statistics.

**Patentansprüche**

1. Verfahren zum Steuern von Übertragungsleistung in einem Kommunikationssystem, mit:

Empfangen eines Signals (S1) in einem Empfänger, das einen Sender anweist, die Übertragungsleistung um einen Leistungssteuerungs-Schritt zu erhöhen oder zu senken, Bestimmen einer Statistik einer Leistungsverteilung eines empfangenen Signals, und adaptivem Steuern der Weite des Leistungssteuerungs-Schritts basierend auf der Statistik, **gekennzeichnet durch** die Schritte:

Vergleichen der bestimmten Statistik mit einer entsprechenden Statistik einer Gauß'schen Leistungsverteilung, und adaptives Steuern der Weite des Leistungssteuerungs-Schritts basierend auf der Statistik **durch** Verwenden einer vorbestimmten festen Leistungssteuerungs-Schrittweite, falls die bestimmte Statistik im Wesentlichen mit der Statistik der Gauß'schen Leistungsverteilung übereinstimmt, Verwenden einer basierend auf der bestimmten Statistik ausgewählten oder berechneten Leistungssteuerungs-Schrittweite, falls die bestimmte Statistik von der Gauß'schen Statistik abweicht.

2. Verfahren gemäß Anspruch 1, **gekennzeichnet durch** die Schritte:

Messen (1-2) des empfangenen Signals (S1), Bestimmen (1-4) der Statistik der Leistungsverteilung des empfangenen Signals (S1), das das übertragene Signal und Störsignale aufweist, basierend auf der Messung, Bestimmen (1-6) von zumindest einem Kurtosiswert der gebildeten Leistungsverteilung, und Berechnen (1-8) einer Leistungssteuerungs-Schrittweite, zumindest teilweise basierend auf der a priori Kenntnis der Schrittweite.

3. Verfahren gemäß Anspruch 2, **gekennzeichnet durch** den weiteren Schritt:

Berechnen oder Auswählen (1-8) einer Leistungssteuerungs-Schrittweite, zumindest teilweise basierend auf dem bestimmten Kurtosiswert.

4. Verfahren gemäß Anspruch 2 oder 3, **dadurch gekennzeichnet, dass** das Profil des empfangenen Signals mit zumindest einem zwischengespeicherten (1-10) Signalprofil, das eine definierte Leistungssteuerungs-Schrittweite hat, verglichen wird, und falls das Profil des empfangenen Signals zumindest teilweise mit dem gepufferten Signalprofil übereinstimmt wird die Leistungssteuerungs-Schrittweite mit der definierten Leistungssteuerungs-Schrittweite verknüpft, um die definierte Leistungssteuerungs-Schrittweite zu sein.

5. Vorrichtung zur Steuerung von Übertragungsleistung in einem Kommunikationssystem, wobei die Vorrichtung angepasst ist, um ein Signal (S1) zu empfangen, das einen Sender anweist, die Übertragungsleistung um einen Leistungssteuerungs-Schritt zu erhöhen oder zu senken, wobei die Vorrichtung angepasst ist zur

Bestimmung einer Statistik einer Leistungsverteilung eines empfangenen Signals, und

adaptiven Steuerung der Weite des Leistungssteuerungs-Schritts basierend auf der Statistik, **dadurch gekennzeichnet, dass** die Vorrichtung des Weiteren angepasst ist zum

Vergleich der bestimmten Statistik mit einer entsprechenden Statistik einer Gauß'schen Leistungsverteilung, und

Verwendung einer vorbestimmten festen Leistungssteuerungs-Schrittweite, falls die bestimmte Statistik im Wesentlichen mit der Statistik der Gauß'schen Leistungsverteilung übereinstimmt,

Verwendung einer, basierend auf der bestimmten Statistik ausgewählten oder berechneten Leistungssteuerungs-Schrittweite, falls die bestimmte Statistik von der Gauß'schen Statistik abweicht.

## Revendications

1. Procédé pour contrôler la puissance de transmission dans un système de communication, comprenant :

la réception, dans un récepteur, d'un signal (S1) demandant à un émetteur d'augmenter ou de diminuer la puissance de transmission d'un pas de contrôle de puissance ;
la détermination de statistiques d'une distribution de puissance d'un signal reçu ;
le contrôle de manière adaptative de la taille dudit pas de contrôle de puissance sur la base desdites statistiques, **caractérisé en ce qu'**il comprend les étapes consistant à :

comparer lesdites statistiques déterminées avec des statistiques correspondantes d'une distribution de puissance gaussienne et contrôler de manière adaptative la taille dudit pas de contrôle de puissance sur la base desdites statistiques
utiliser une taille de pas de contrôle de puissance fixe prédéterminée si les statistiques déterminées correspondent sensiblement aux statistiques de la distribution de puissance gaussienne ;
utiliser une taille de pas de contrôle de puissance sélectionnée ou calculée sur la base desdites statistiques déterminées si lesdites statistiques déterminées s'écartent desdites statistiques gaussiennes.

2. Procédé selon la revendication 1, **caractérisé par** les étapes consistant à :

mesurer (1-2) le signal reçu (S1) ;
déterminer (1-4) les statistiques de la distribution de puissance du signal reçu (S1) comprenant le signal et le bruit transmis sur la base de ladite mesure ;
déterminer (1-6) au moins une valeur d'aplatissement de la distribution de puissance formée ; et
calculer (1-8) une taille de pas de contrôle de puissance au moins partiellement sur la base d'une connaissance empirique de la taille du pas.

3. Procédé selon la revendication 2, **caractérisé en ce qu'**il comprend, en outre, l'étape consistant à :

calculer ou sélectionner (1-8) une taille de pas de contrôle de puissance au moins partiellement sur la base de la valeur d'aplatissement déterminée.

4. Procédé selon la revendication 2 ou 3, **caractérisé en ce que** le profil du signal reçu est comparé à au moins un profil de signal mis en mémoire tampon (1-10) ayant une taille de pas de contrôle de puissance définie et, si le profil du signal reçu correspond au moins partiellement au profil du signal mis en mémoire tampon, la taille du pas de contrôle de puissance est liée de manière à être la taille de pas de contrôle de puissance définie.

5. Dispositif pour contrôler la puissance de transmission dans un système de communication, lequel dispositif est adapté pour recevoir un signal (S1) demandant à un émetteur d'augmenter ou de diminuer la puissance de transmission d'un pas de contrôle de puissance, dans lequel l'appareil est adapté pour :

déterminer des statistiques d'une distribution de puissance d'un signal reçu ; et
contrôler de manière adaptative la taille dudit pas de contrôle de puissance sur la base desdites statistiques, **caractérisé en ce que** l'appareil est, en outre, adapté pour :

comparer lesdites statistiques déterminées avec des statistiques correspondantes d'une distribution de puissance gaussienne ; et
utiliser une taille de pas de contrôle de puissance fixe prédéterminée si les statistiques déterminées correspondent sensiblement aux statistiques de la distribution de puissance gaussienne ;
utiliser une taille de pas de contrôle de puissance sélectionnée ou calculée sur la base desdites statistiques déterminées si lesdites statistiques déterminées s'écartent desdites statistiques gaussiennes.

FIG. 1

1-2 1-4 1-6 1-8 1-10

| Measure received signal | → | Form the statistics | → | Measure the kurtosis | → | Select step size according the kurtosis | → | Buffer the step size (if needed) |

S1 S2

FIG. 2

Kurtosis

X1

Rx_Nominal

FIG. 3